# EUROPEAN PATENT APPLICATION

(11) **EP 4 542 065 A1**
(43) Date of publication of application: **23.04.2025**
(21) Application number: 23204066.7
(22) Date of filing: 17.10.2023
(51) Int. Cl.: F16B 37/04

(54) **CONNECTOR UNIT COMPRISING NUT RECEPTABLE**

(71) Applicant: Hilti Aktiengesellschaft, 9494 Schaan (LI)
(72) Inventor: Thon, Raphael, 6800 Feldkirch (AT); Fasser, Simon, 9493 Mauren (LI)
(74) Representative: Hilti Aktiengesellschaft Corporate Intellectual Property

(57) **Abstract**

Connector unit for providing a connection to a strut channel that has two opposing lips, the connector unit comprising
• an elongate channel nut for engaging behind the lips of the channel, wherein the channel nut has a threaded bore for threadedly receiving a threaded rod,
• a rotational driver for rotationally coupling the threaded rod to the channel nut, for rotating the channel nut between a channel insertion rotational position and a channel engagement rotational position, and
• a lip insert for engaging between the lips of the channel so as to provide a rotational seat on the channel, wherein the rotational driver is connected to the lip insert,
• wherein the lip insert comprises at least one first resilient tongue for resiliently acting against a first lip of the channel.

## Description

The invention relates to a connector unit for providing a connection to a strut channel, a channel connector comprising such a connector unit and to a connector arrangement comprising such a channel connector.

A related connector unit sharing some features with the present connector unit is described in European Patent Application with filing number 22211903.4.

EP 3805579 A1 discloses a channel nut provided with offset notches that are intended for engaging the lips of a strut channel. Channel nuts like those described in EP 3805579 A1 are used in a product sold under the name "Hilti MT-TL-M10". In case of this product, the channel nut is rotated by means of a plastic frame connected to the channel nut.

DE 10218602 A1, EP 1357304 B1, and EP 3927981 A1 disclose channel connectors, in which rotation of the channel nut is caused pushing the channel connectors into the channel.

It is an object of the invention to provide a connector unit, a channel connector and a connector arrangement that allow particularly versatile, easy and reliable installation, whilst being particularly well-performing.

This object is achieved by a connector unit according to claim 1. Dependent claims refer to preferred embodiments of the invention.

Accordingly, there is provided a connector unit for providing a connection to a strut channel that has two opposing lips, the connector unit comprising
- an elongate channel nut for engaging behind the lips of the channel, wherein the channel nut has a threaded bore for threadedly receiving a threaded rod,
- a rotational driver for rotationally coupling the threaded rod to the channel nut, for rotating the channel nut between a channel insertion rotational position and a channel engagement rotational position, and
- a lip insert for engaging between the lips of the channel so as to provide a rotational seat on the channel, wherein the rotational driver is connected to the lip insert,
- wherein the lip insert comprises at least one first resilient tongue for resiliently acting against a first lip of the channel.

Accordingly, by means of the rotational driver, the channel nut and the threaded rod are coupled to rotate together. This allows the channel nut to be rotated from the channel insertion rotational position, in which the channel nut can pass between the lips of the channel into the channel, into the channel engagement rotational position, in which the channel nut engages behind the lips of the channel, through rotating the threaded rod.

The lip insert is intended to be arranged, at least partly, between the lips of the channel, where it geometrically locks between the lips, so as to provide a rotational seat on the channel, possibly with some play, but possibly also tight.

The rotational driver is intended for rotationally coupling the threaded rod to the channel nut, for rotating the channel nut, relative to the channel and/or relative to the lip insert engaged within the channel, between the channel insertion rotational position and the channel engagement rotational position. The channel insertion rotational position and a channel engagement rotational position can have an angular offset of 60° for example. Rotation between the channel insertion rotational position and the channel engagement rotational position takes place around an axis of the threaded bore, which is the connector axis.

The rotational driver is connected to the lip insert, in particular connected to the lip insert so as to allow rotation of the rotational driver relative to the lip insert around the connector axis. The rotational driver is connected to the channel nut so that the channel nut rotates with the rotational driver around the connector axis.

The lip insert can preferably be a plastic part. The channel nut can preferably be, at least partly, a metal part. The lip insert can have a passage for receiving the threaded rod when the threaded rod is rotationally coupled to the channel nut by means of the rotational driver and/or when the threaded rod is threadedly received in the threaded bore of the channel nut.

The lip insert comprises at least one first resilient tongue for resiliently acting against a first lip of the channel, in particular for securing the lip insert on the channel. Providing at least one first resilient tongue of this kind allows to pre-mount the lip insert and thus the entire connector unit on the channel, and this can be achieved in particular easy manner, namely by simply pushing the lip insert between the channel lips. Alternatively, positioning of the connector unit can be achieved via the threaded rod when coupled to the rotational driver. Thus, a particular versatile connector can be achieved at particularly low effort. The at least one first tongue and, if available, at least one second tongue can also help absorbing geometric tolerances of the channel, and can centre the lip insert on the channel, which can further improve operation.

The at least one first resilient tongue can in particular be configured to frictionally engage the first lip of the channel. Alternatively or additionally, it can be configured to geometrically engage the first lip of the channel (i.e. to provide a form-fit engagement).

Preferably, the lip insert comprises at least two first resilient tongues for resiliently acting against the first lip of the channel, in particular for securing the lip insert on the channel. Providing two or more first resilient tongues can provide particularly good channel engagement at particularly low effort. In particular, the at least two first resilient tongues are spaced from one another and/or can be elastically operated independently from one another.

According to another preferred embodiment of the invention, the lip insert comprises at least one second resilient tongue, more preferably at least two second resilient tongues, for resiliently acting against the second lip of the channel, in particular for securing the lip insert on the channel. Accordingly, both the first lip and the second lip of the channel are individually engaged by the lip insert, which can further improve channel engagement. The at least one second resilient tongue can in particular be configured to frictionally engage the second lip of the channel. Alternatively or additionally, it can be configured to geometrically engage the second lip of the channel (i.e. to provide a form-fit engagement). In particular, the at least two second resilient tongues are spaced from one another and/or can be elastically operated independently from one another.

Additional alignment means might be optionally provided.

It is particularly preferred that the two first resilient togues, the two second resilient tongues and the threaded bore form a quincunx in viewing direction parallel to the axis of the threaded bore. In particular, the threaded bore forms the central dot of the quincunx, which is surrounded by the resilient tongues, in viewing direction parallel to the axis of the threaded bore (i.e. in viewing direction into the threaded bore and in viewing direction parallel to the connector axis). Providing four resilient tongues, with two tongues per channel lip, and having the threaded bore, that provides the axis of rotation of the channel nut, in a position that is generally centred with respect to the four resilient tongues (i.e. having these items in a quincunx arrangement), can provide particularly efficient self-alignment, more particularly also during rotation of the channel nut.

Preferentially, the at least one first resilient tongue is integrally formed on the lip insert. Accordingly, the at least one first resilient tongue and a remainder of the lip insert are a single piece. This can be advantageous in view of manufacturing and performance. Additionally or alternatively, the at least one second resilient tongue can be integrally formed on the lip insert.

According to another preferred embodiment of the invention, the connector unit further comprises two spacers that project from the lip insert on opposite sides of the lip insert, so as to define a pre-determined spacing to an adjacent connector unit. Accordingly, when two connector units of the described type are placed adjacent to one another between the lips of the channel, they can be moved relative to each other along the channel until they abut against each other at their respective spacers, and this abutment will define a pre-determined connector unit distance, which can e.g. match the hole pattern in a part that is intended to be attached to the connector units. Accordingly, an even better versatility can be achieved.

Preferably, each of the two spacers is generally flat, wherein the two spacers extend in non-parallel relationship with one another. Having flat spacers can reduce material effort, and having them non-parallel can provide that the spacers of adjacent connector units abut in an angled relationship, which can provide particularly reliable abutment despite the relatively low material effort required.

It is further preferred that the rotational driver comprises a first pin and the lip insert comprises a first pin receptacle for receiving the first pin when the channel nut is in the channel insertion rotational position. This can provide a locking mechanism that retains, e.g. during transport to the construction site, the channel nut within the channel insertion rotational position in particularly easy and reliable manner. By axial movement of the first pin out of the first pin receptacle, the channel nut is released for rotation out of the channel insertion rotational position. The first pin receptacle can provide a snap fit mechanism for the first pin that provides a stop that can be overcome with some amount of axial force. Such a snap fit mechanism can further improve reliability, since the channel nut is retained until that amount of axial force has been applied. It is particularly preferred that a first catch ridge is arranged at the first pin receptacle so as to provide a snap fit mechanism for the first pin. Accordingly, the snap fit mechanism includes a first catch ridge provided at the first pin receptacle, that can be overcome by the first pin by some amount of force.

Additionally, it can be provided that the rotational driver comprises a second pin and the lip insert comprises a second pin receptacle for receiving the second pin when the channel nut is in the channel insertion rotational position.

According to another preferred embodiment of the invention, the lip insert has at least one nut receptacle for receiving the channel nut when the channel nut is in the channel engagement rotational position so as to rotationally lock the channel nut in the channel engagement rotational position.

The lip insert is provided with at least one nut receptacle that can receive the channel nut when the latter is in the channel engagement rotational position, so as to geometrically lock the channel nut in the channel engagement rotational position. Thus, the at least one nut receptacle geometrically constraints the channel nut when received therein, so as to prevent rotation of the channel nut back into channel insertion rotational position. This can provide particularly good and reliable performance. Moreover, a functionality can be provided that ensures that the channel nut can act against the lips of the channel only when the channel nut is received within the nut receptacle, which can prevent installation in an incorrect channel nut position, further improving reliability and/or performance. If the channel nut is axially biased, in particular by the compression spring discussed later, the nut receptacle can also provide a snap functionality when the channel nut enters the nut receptacle, potentially giving the installer audible, haptic or/and optical feedback that the channel nut has reached the intended channel insertion rotational position. This can further improve performance and/or reliability.

In particular, the at least one nut receptacle is intended for axially receiving the channel nut when the channel nut is in the channel engagement rotational position, i.e. positioning of the channel nut within the nut receptacle involves axial displacement of the channel nut with respect to the lip insert.

The rotational driver can include means to geometrically, frictionally or/and chemically couple the threaded rod to the channel nut. It could be simply a gluing layer temporarily locking the threaded rod within the threaded bore. It is particularly preferred that the rotational driver comprises a driver sleeve for receiving the threaded rod, and a driver base that connects the driver sleeve to the channel nut. This can provide a particularly well performing yet easy to manufacture design. The driver sleeve is aligned with the threaded bore of the channel nut, so that the threaded rod can pass through the driver sleeve into the threaded bore. The driver sleeve and the driver base are preferably one piece and/or plastic parts. The driver base can in particular be a frame. The driver sleeve is preferably so dimensioned that it frictionally engages the threaded rod inserted into the driver sleeve. More particularly, the driver sleeve can be so dimensioned that it frictionally engages the tips of the thread of the threaded rod inserted into the driver sleeve.

According to another advantageous embodiment of the invention, the driver sleeve projects into the lip insert so as to provide a rotational bearing of the driver sleeve within the lip insert. Accordingly, the channel nut is rotatably mounted on the lip insert via the driver sleeve that is connected to the driver sleeve. This can further improve performance and reliably. The driver sleeve might be continuous, or it might also be interrupted, for example to increase flexibility, for example to improve snap or/and ratchet functionality described below.

The driver sleeve is preferably connected to the lip insert by means of an annular snap fit. This can provide a loss prevention mechanism in a particular easy manner. The annular snap fit can preferably comprise at least one snap tooth provided on the driver sleeve.

Advantageously, the rotational driver comprises at least one ratchet tooth for engaging, in particular for axially engaging, the threaded rod. Accordingly, at least one tooth is provided that is provided with some elasticity, internally or/and externally, that allows the tooth to be displaced as the threaded rod to passes by and that subsequently resets the tooth to engage into the thread of the threaded rod. An axial coupling of the rotational driver to the threaded rod can thus be established in a particularly easy way by pushing-in the threaded rod, which can further facilitate handling. The ratchet tooth can for example be an annular segment or a helical segment.

It is particularly preferred that the at least one ratchet tooth is provided on the driver sleeve, which can provide a particularly easily built design and particular good performance.

According to another preferred embodiment of the invention, the channel nut comprises a first flange and a second flange, the lip insert has a first nut receptacle for receiving the first flange of the channel nut when the channel nut is in the channel engagement rotational position so as to lock the channel nut in the channel engagement rotational position, and the lip insert has a second nut receptacle for receiving the second flange of the channel nut when the channel nut is in the channel engagement rotational position so as to lock the channel nut in the channel engagement rotational position. Accordingly, the channel nut has two protruding flanges, preferably connected by a web to give a U-shape, wherein the provision of two protruding flanges can provide particularly good interlock with inwardly curved channel lips. In particular, each of flanges can be provided with two notches for engaging a respective channel lip. The lip insert is provided with two nut receptacles, for receiving one of the flanges each, which can provide particularly good rotational interlock in particularly easy manner.

Preferably, the lip insert is formed for axially locking between the lips of the channel so as to provide an axial seat on the channel, in particular a unidirectionally axial seat. Accordingly, the lip inserts tapers from a rear region towards a tip region, and the taper (which taper can be continuous or, preferably, also discontinuous, i.e. with relatively abrupt change) is so dimensioned, that the lip insert can engage between the lips of the channel but cannot be pulled through the lips of the channel when the lip insert is installed as intended. Thus, particularly reliable orientation of the lip insert can be achieved in a particularly easy manner. The at least one nut receptacle is in particular provided in the tip region of the lip insert.

The lip insert can, advantageously, have a rear flat for contacting a connector base. This can provide rotation of the lip insert relative to the connector base of an attachment part in a particular easy and reliable manner.

The invention also relates to a channel connector comprising a connector unit as described herein, a connector base for abutting against the lips of the channel, wherein the lip insert is arranged, at least partly, between the connector base and the channel nut, and a threaded rod that passes, rotatably, through the connector base and through the lip insert, to the rotational driver, wherein the rotational driver couples the threaded rod to the channel nut. Accordingly, the connector unit is integrated into a channel connector as intended. The connector base can be part of an attachment part. Preferably, the connector base is a base plate.

The channel connector can be shipped as it is to the installer. Alternatively, the parts of the channel connector can be shipped separately and assembled by the installer.

It is particularly preferred that the channel connector further comprises an axial abutment that is provided on the threaded rod, and a compression spring, which acts, indirectly or directly, against the axial abutment of the threaded rod, and which also acts, preferably indirectly via the connector base, against the lip insert, so as to bias the channel nut, which is coupled to the threaded rod by means of the rotational driver, against the lip insert. This bias can provide the snap-in effect already discussed above, when the channel nut comes into alignment with the nut receptacle in the channel engagement rotational position, and can subsequently provide a pre-mounting force providing some engagement of the channel nut on the channel lips, so that the channel connector is already fixed, but still slidable on the channel.

The axial abutment is preferably fixed on the threaded rod to rotate with the threaded rod, which allows rotating the channel nut by rotating the axial abutment. Preferably, the axial abutment and the threaded rod are integral parts. It is particularly preferred that the axial abutment is a head, in particular an integral head, of the threaded rod. The head can for example be a hex head.

The compression spring is a preferably conical spring. This can prevent overlap of the windings of the spring as the threaded rod is tightened, thereby providing particularly well-defined force.

Advantageously, the compression spring is clamped to the threaded rod. This can provide a loss prevention mechanism in particularly easy manner and/or it can permit particularly easy handling of the threaded rod and of the compression spring as a unit.

The invention also relates to a connector arrangement comprising the mentioned channel and the mentioned channel connector.

Throughout this document, wherever the terms "axially", "longitudinally", "radially" and "circumferentially" are used, they should refer, in particular, to the connector axis, which is the axis of the threaded bore of the channel nut, which is also the intended axis of rotation of the channel nut between the channel insertion rotational position and the channel engagement rotational position, which is an axis perpendicular to the channel mouth when the connector unit and/or the channel connector is installed as intended.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a perspective view, figure 2 a side view and figure 3 a top view of a connector unit.
Figure 4 is a top view, figure 5 a bottom view, figure 6 a perspective view from below, and figure 7 a perspective view from above of the lip insert of the connector unit of figures 1 to 3.
Figure 8 is a top view, figure 9 a first side view, figure 10 a second side view, figure 11 a perspective view and figure 12 a sectional view of the rotational driver of the connector unit of figures 1 to 3.
Figures 13 to 31 show a channel connector including the connector unit of figures 1 to 3 in different views at successive stages during a possible installation sequence of the channel connector on a strut channel. In particular,

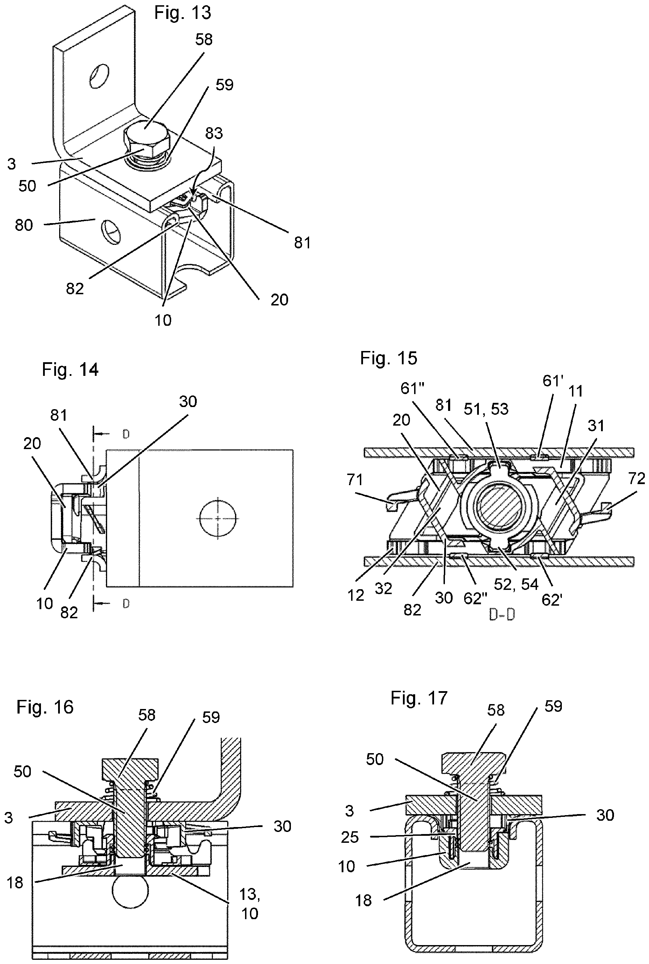

   - figures 13 to 17 show an insertion stage (first stage), with the channel connector in perspective view in figure 13, in side view (with channel partly omitted) in figure 14, in sectional view D-D according to figure 14 in figure 15, and in two different sectional side views in figures 16 and 17;

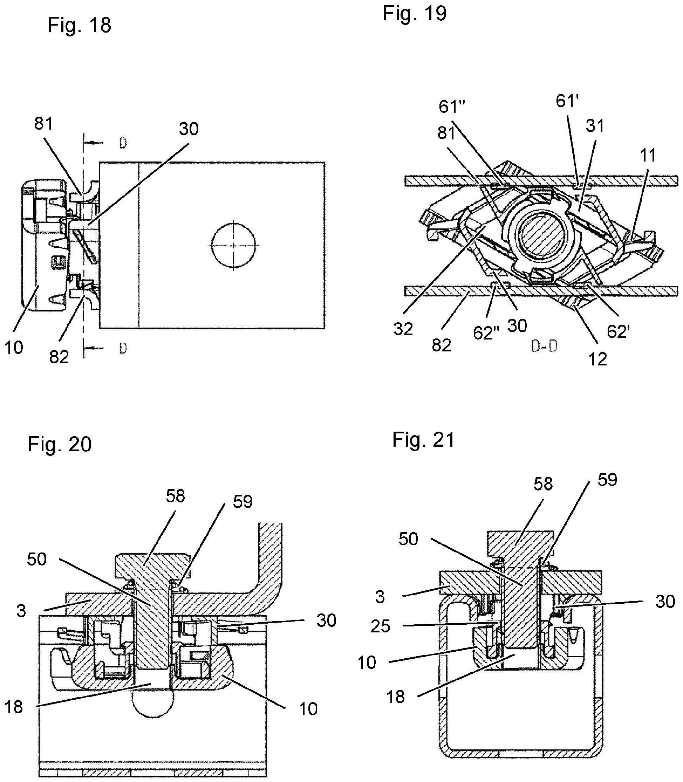

   - figures 18 to 21 show an intermediate rotation stage (second stage, following the first stage), with the channel connector in side view (with channel partly omitted) in figure 18 and in sectional view D-D according to figure 18 in figure 19, and in two different sectional side views in figures 20 and 21;

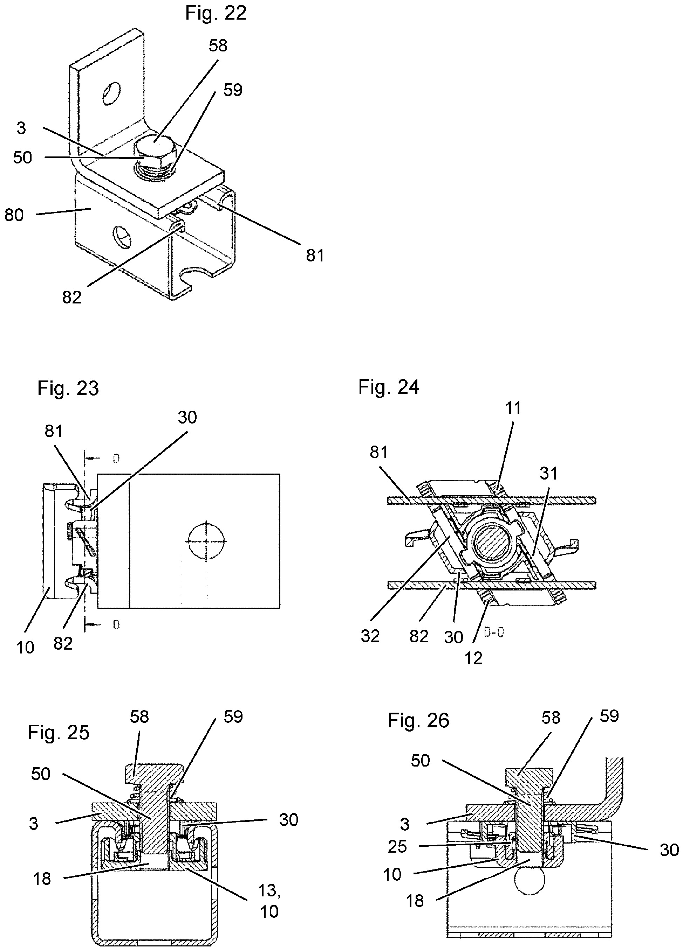

   - figures 22 to 26 show a snap-in stage (third stage, following the second stage), with the channel connector in perspective view in figure 22, in side view (with channel partly omitted) in figure 23, in sectional view D-D according to figure 23 in figure 24, and in two different sectional side views in figures 25 and 26;

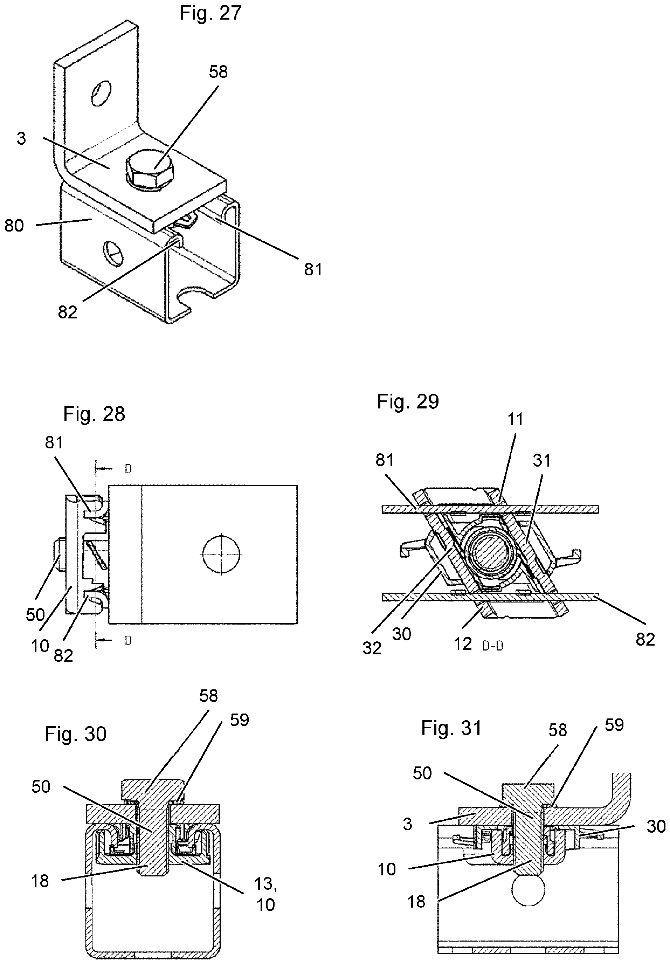

   - figures 27 to 31 show a final stage (fourth stage, following the third stage), with the channel connector in perspective view in figure 27, in side view in figure 28 (with channel partly omitted), in sectional view D-D according to figure 28 in figure 29, and in two different sectional side views in figures 30 and 31.

The channel connector is intended to connect to an elongate strut channel 80, as shown for example in figure 13. The strut channel 80 can for example be a C-shape channel, as shown, or also a V-shaped or differently shaped channel. The channel 80 comprises a mouth, where the channel 80 comprises two lips 81, 82 which lips 81, 82 flank a slot 83 that provides access to the inside of the channel 80 from the outside of the channel 80. In the shown embodiment, the lips 81, 82 are inturned, but this is an example only, and in other embodiments, they could be differently shaped, including a flat shape.

The channel connector comprises a connector base 3 that is dimensioned and intended to abut against the lips 81 and 82 of the channel 80 from outside of the channel 80, i.e. the connector base 3 is dimension sufficiently large so that it does not enter the slot 83 provided between the lips 81 and 82. The connector base 3 can be part, also integral part, of an attachment element. In the embodiment shown, the attachment element is a L-bracket, but this is an example only.

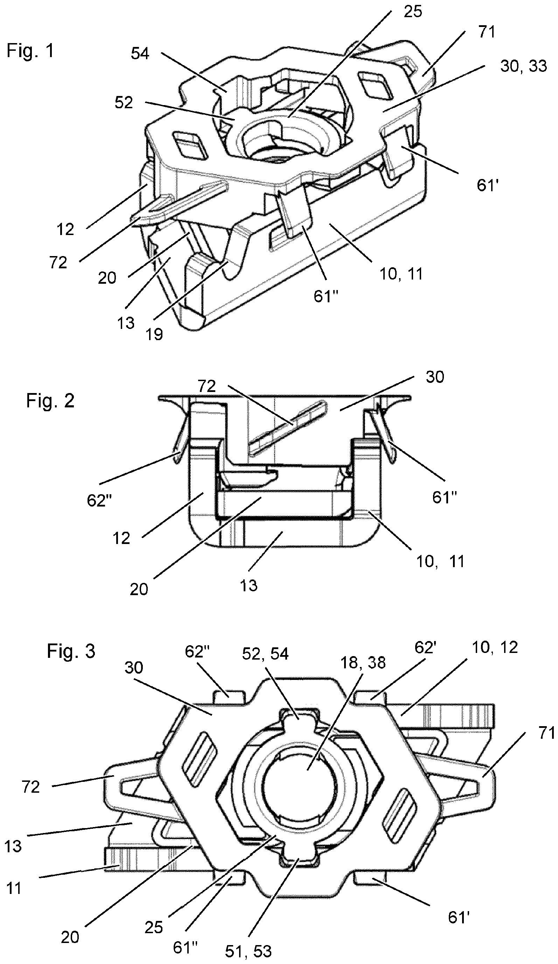

The channel connector further comprises an elongate channel nut 10, consisting for example of steel. The channel nut 10 comprises an internally threaded bore 18, see for example figures 3, 16 and 17. The threaded bore 18 is intended for screwingly receiving a threaded rod 50 of the channel connector (the threaded rod 50 being shown for example in figures 13, 16 and 17). The channel nut 10 is elongate and has a width that is smaller than the slot 83 provided at the mouth of the channel 80, and a length that is wider than the slot 83 provided at the mouth of the channel 80. Consequently, the channel nut 10 may be inserted into the channel 80 though the slot 83 and subsequently locked behind the lips 81 and 82 of the channel 80 by rotating the channel nut 10, around an axis of the threaded bore 18 (which is the connector axis), from a channel insertion rotational position into a channel engagement rotational position. In the present embodiment, the channel nut 10 is U-profiled, and comprises a first flange 11, a second flange 12 and a web 13 that connects the first flange 11 and the second flange 12 to one another. The threaded bore 18 is provided within the web 13. In the present embodiment, the threaded bore 18 is collared, in order to achieve greater thread height, but this is an example only. Each of flanges 11 and 12 has two notches 19, each for receiving one of the lips 81 and 82 of the channel 80, respectively. By way of example, one of the notches 19 is referenced to in figure 1.

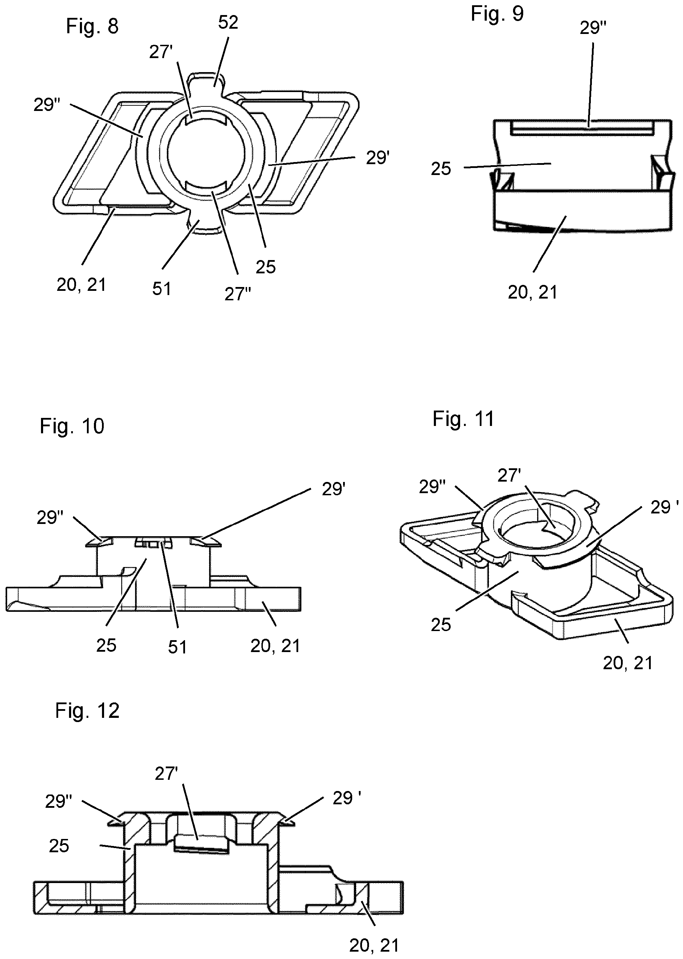

The channel connector further comprises a rotational driver 20, consisting for example of a plastic material, and shown in detail in figures 8 to 12. The rotational driver 20 is intended for rotationally coupling the threaded rod 50 of the channel connector (the threaded rod being shown for example in figures 13, 16 and 17) to the channel nut 10, such that the threaded rod 50 and the channel nut 10 can co-rotate around the connector axis, which coincides with the axis of the threaded bore 18, so that the channel nut 10 can be rotated between the channel insertion rotational position and the channel engagement rotational position through rotating the threaded rod 50. The rotational driver 20 comprises a driver sleeve 25, intended for receiving the threaded rod 50, and a driver base 21, which has a two-winged and/or frame-like geometry, and which connects the driver sleeve 25 to the channel nut 10. The rotational driver 20 furthermore comprises at least one tooth 27', 27", which projects into the driver sleeve 25, and which is intended for engaging the thread of the threaded rod 50, thereby geometrically and/or frictionally coupling the threaded rod 50 to the rotational driver 20 and thus to the channel nut 10 attached thereto. In the present embodiment, two separate teeth 27', 27" are provided, each of them being generally helical. The at least one tooth 27', 27" and/or the driver sleeve 25 have some elasticity, which allows the at least one tooth 27', 27" to successively engage the thread of the threaded rod 50 in a ratchet-like manner when the threaded rod 50 is plugged-in axially into the driver sleeve 25. The insertion opening and the bottom opening, respectively, of the driver sleeve 25 are opposite openings of the driver sleeve 25. In the shown embodiment, the rotational driver 20 is a monolithic piece, i.e. all of its parts are one piece. However, this is an example only.

The channel connector further comprises a lip insert 30, consisting for example of a plastic material. The lip insert 30 has a geometric shape that can engage into the channel lips 81 and 82 so as to provide a bidirectionally rotational (around the connector axis, which axis is perpendicular to the mouth of the channel when the lip insert is installed as intended) seat and a unidirectional axial (in the direction of the connector axis) seat. In other words, the lip insert 30 is so dimensioned that it can be positioned between the lips 81, 82 (without being pulled through the lips 81, 82), where the lip insert 30 is geometrically locked (preferably with some play) against rotation around the connector axis by the lips 81 and 82. The lip insert 30 comprises two first resilient togues 61', 61" that are arranged at a first side of the lip insert 30, and two second resilient tongues 62', 62", which are arranged at an opposite second side of the lip insert 30. The first resilient togues 61', 61" are intended to resiliently engage the first lip 81, whereas the second resilient tongues 62', 62" are intended to resiliently engage the second lip 82, when the lip insert 30 is arranged between the lips 81 and 82. The resilient tongues 61', 61", 62', 62" provide resilience that can accommodate tolerances in the width of the slot 83 that is provided between the lips 81 and 82. Additionally or alternatively, the resilient tongues 61', 61", 62', 62" can resiliently lock the lip insert 30 in a pre-mount position between the lips 81 and 82.

In viewing direction parallel to the axis of the threaded bore 18, i.e. in view direction parallel to the connector axis, which view is e.g. shown in figure 3, the resilient tongues 61', 61", 62', 62" and the threaded bore 18 form a quincunx, with the threaded bore 18 arranged centrally between the resilient tongues 61', 61", 62', 62". The resilient tongues 61', 61", 62', 62" are formed integrally on the lip insert 30. Their respective free ends project downwardly, i.e. in the axial direction that faces the channel nut 10.

The lip insert 30 comprises at least one nut receptacle 31, 32. This at least one nut receptacle 31, 32 is intended for receiving the channel nut 10 when the channel nut 10 is in the channel 80 engagement rotational position, by displacing the channel nut 10 axially towards the lip insert 30. Once the channel nut 10 is received in the at least one nut receptacle 31, 32 of the lip insert 30, the lip insert 30 geometrically rotationally locks (possibly with some play, but possibly also snugly) the channel nut 10 in the channel 80 engagement rotational position. In the shown embodiment, two groove-shaped nut receptacles 31, 32 are provided, the first nut receptacle 31 being intended to receive the first flange 11 of the channel nut 10 and the second nut receptacle 32 being intended to receive the second flange 12 of the channel nut 10. The lip insert 30 has a rear flat 33 for contacting the connector base 3, the rear flat being denoted by a reference numeral for example in figure 1. The driver sleeve 25 of the rotational driver 20 projects into the lip insert 30, and this provides a rotational bearing of the driver sleeve 25 within the lip insert 30, which allows rotation of rotational driver 20 and the channel nut 10 connected thereto with respect to the lip insert 30 around the connector axis. The driver sleeve 25 is connected to the lip insert 30 by means of an annular snap fit. This annular snap fit can comprise radial snap teeth 29', 29" projecting radially outwards on the driver sleeve, and corresponding radial snap teeth 39', 39" provided on the lip insert 30. In the shown embodiment, the lip insert 30 is a monolithic piece, i.e. all of its parts are one piece. However, this is an example only.

The radial snap teeth 29', 29" have contact surfaces for the corresponding radial snap teeth 39', 39". As can e.g. be seen in figure 10, these contact surfaces can be inclined towards the corresponding radial snap teeth 39', 39", so that the snap teeth 29', 29" form hooks. In analogy, the contact surfaces of the radial snap teeth 39', 39" might be inclined towards the radial snap teeth 29', 29", so that the snap teeth 39', 39" form hooks. Providing hooks at the snap teeth can provide particularly good mutual engagement.

The lip insert 30 has a passage 38 for the threaded rod 50, which passage 38 is denoted by a reference numeral in figure 3. The passage 38 is aligned with the driver sleeve 25 and/or with the threaded bore 18 and/or with a rod passage in the connector base 3, so that the threaded rod 50 can be passed through the passage in the connector base 3, through the passage 38 and through the driver sleeve 25 into the threaded bore 18. The connector axis passes through rod passage in the connector base 3, through the passage 38, through the driver sleeve 25 and/or through the threaded bore 18. The lip insert 30 is arranged axially between the connector base 3 and the channel nut 10 when the connector is assembled.

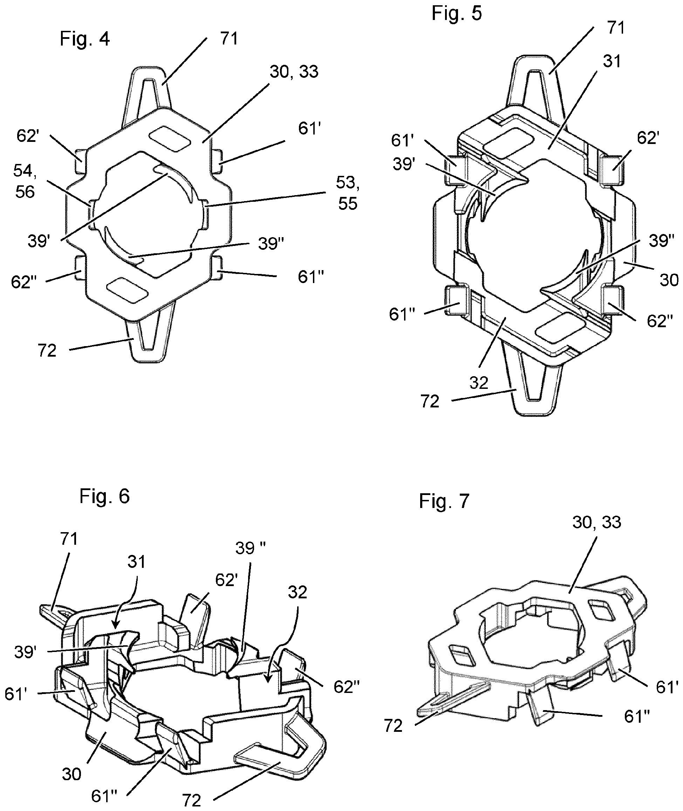

The rotational driver 20 comprises a first pin 51 and the lip insert 30 comprises a first pin receptacle 53 for receiving the first pin 51 when the channel nut 10 is in the channel 80 insertion rotational position. The first pin 51 projects radially from the driver sleeve 25. The first pin receptacle 53 is, in the present embodiment, an axially extending groove. Engagement of the first pin 51 within the first pin receptacle 53 can secure the channel nut 10 in the channel 80 insertion rotational position, e.g. during transport. This securement can be overcome by pushing, in particular by axially pushing, the first pin 51 out of the first pin receptacle 53. In the present embodiment, a first catch ridge 55 (see figure 4) is provided at the axially extending groove that forms the first pin receptacle 53, wherein the first catch ridge 55 provides a snap fit mechanism that requires some force to axially push the first pin 51 out of the first pin receptacle 53, thereby providing an additional lock.

The rotational driver 20 comprises a second pin 52 and the lip insert 30 comprises a second pin receptacle 54 for receiving the second pin 52 when the channel nut 10 is in the channel 80 insertion rotational position. The second pin 52 projects radially from the driver sleeve 25. The second pin receptacle 54 is, in the present embodiment, an axially extending groove. Engagement of the second pin 52 within the second pin receptacle 54 can secure the channel nut 10 in the channel 80 insertion rotational position, e.g. during transport. This securement can be overcome by pushing, in particular axially pushing, the second pin 52 out of the second pin receptacle 54. In the present embodiment, a second catch ridge 56 (see figure 4) is provided at the axially extending groove that forms the second pin receptacle 54, wherein the second catch ridge 56 provides a snap fit mechanism that requires some force to axially push the second pin 52 out of the second pin receptacle 54, thereby providing an additional lock.

In the shown embodiment, the first pin 51 is configured to abut on the first flange 11, and the second pin 52 is configured to abut on the second flange 12. These abutments can provide enhanced stiffness, in particular unidirectional stiffness, of the pins 51 and 52, which can improve operation of the above-described snap mechanisms of the pins 51 and 52.

The connector unit further comprises two spacers 71, 72 that project from the lip insert 30 on opposite sides of the lip insert 30, so as to define a pre-determined spacing to an adjacent connector unit. In the present embodiment, each of the two spacers 71, 72 is frame like with a through passage therein, but this is an example only. The spacers are intended to provide a pre-determined distance when two connector units are arranged adjacently within the same strut channel. By way of example, each of the two spacers 71, 72 is generally flat, wherein the two spacers 71, 72 extend in non-parallel relationship with one another, and wherein the two spacers a non-perpendicular to the connector axis, which can ensure reliable abutment despite the flat configuration.

The channel nut 10, the rotational driver 20 and the lip insert 30 form the connector unit, which connector unit is a part of the channel connector.

The channel connector further comprises the already aforementioned threaded rod 50. The threaded rod passes through the passage in the connector base 3 and through the passage 38 in the lip insert 30 into the driver sleeve 25.

The channel connector further comprises an axial abutment 58, which is provided on the threaded rod 50. In the shown embodiment, the axial abutment 58 is a head, in particular a hex head, provided monolithically on the threaded rod 50, which is, however, an example only. The channel connector further comprises a compression spring 59, which on one side rests against the axial abutment 58 of the threaded rod 50 and on the other side against the lip insert 30, namely via the connector base 3. The compression spring 59 biases the channel nut 10 that is coupled to the threaded rod 50 by means of the rotational driver 20 against the lip insert 30, and is able to force the channel nut 10 into the at least one nut receptacle 31, 32 of the lip insert 30 when the channel nut 10 reaches the channel 80 engagement rotational position, thereby creating a snap-in mechanism, in which the channel nut 10 snaps into the at least one nut receptacle 31, 32.

In the shown embodiment, the compression spring 59 is, by way of example, a conical spring.

In the following, a possible installation sequence of the channel connector on the channel 80 is described. At the first stage of the installation sequence, shown in figures 13 to 17, the channel connector is in insertion configuration, in which the channel nut 10 is in the channel 80 insertion rotational position, in which the channel nut 10 is rotationally offset with respect to the at least one nut receptacle 31, 32, and in which the compression spring 59 is slightly pre-tensioned. In the insertion configuration of the channel connector, the threaded rod 50 can end just before the threaded bore 18 of the channel nut 10, as shown. However, in other embodiments, the threaded rod 50 can already reach into the threaded bore 18 of the channel nut 10 in the insertion configuration. The connector is, with the channel nut 10 leading, inserted through the lips 81, 82 into the channel 80, until the connector base 3 and the lip insert 30 abut against the lips 81, 82 of the channel 80, so that the lip insert 30 provides an axial and rotational seat on the of the channel 80. The resilient tongues 61', 61", 62', 62" engage the respective lips 81, 82 and can provide a pre-mounting lock and alignment.

The threaded rod 50 is then axially pushed downward i.e. towards the channel nut 10. Since the threaded rod 50 axially abuts against the channel nut 10 or/and the rotational driver 20, this axial action causes the channel nut 10 and the rotational driver 20 to be moved axially away from the lip insert 30, until the pins 51 and 52 overcome the respective snap fit mechanisms and exit their respective pin receptacles 53 and 54, allowing the channel nut 10 that was previously rotationally locked in the channel 80 insertion rotational position to now rotate around the connector axis. The threaded rod 50 is then rotated around the connector axis, for example by manually rotating the axial abutment 58 attached to the threaded rod 50. The rotational coupling provided by the rotational driver 20 causes the channel nut 10 to co-rotate with the threaded rod 50. The height of the lip insert 30 is sufficiently high, so that rotation of the channel nut 10 resting on the lip insert 30 is not obstructed by the height of the lips 81, 82, which allows the channel nut 10 to rotate behind the lips 81, 82. An intermediate rotation stage following from this rotation is shown in figures 18 to 21. The quincunx arrangement, with the threaded bore 18 arranged centrally between the resilient tongues 61', 61", 62', 62", can assist that the lock and alignment provided by the resilient tongues 61', 61", 62', 62" is well upheld during this rotation.

The channel nut 10 is further rotated around the connector axis by means of the threaded rod 50 until the channel nut 10 reaches the channel 80 engagement rotational position. In this rotational position, the first flange 11 is parallel to the first nut receptacle 31, and the second flange 12 is parallel to the second nut receptacle 32. Once the channel 80 engagement rotational position is reached by the channel nut 10, pretension of the compression spring 59 causes the channel nut 10, more particularly its flanges 11 and 12, to snap into the respective nut receptacle 31 or 32, providing the installer with sensory feedback that the correct installation position is reached. The flanges 11 and 12 are then pre-tensioned against the lips 81, 82 by means of the compression spring 59, which provides some preliminary installation force that still allows lateral displacement of the connector along the channel 80 (in particular if the threaded rod 50 is pressed-in slightly against the force of the compression spring 59). In particular, the notches 19 in the flanges 11 and 12 interlock with the respective lips 81, 82 in this state. The resulting snap-in stage is shown in figures 22 to 26. In the present embodiment, the angular offset of the channel nut 10 between the channel 80 engagement rotational position and the channel 80 insertion rotational position is 60° (around the connector axis). However, different angular offsets, such as 90° could also be envisaged.

Finally, the threaded rod is screwed into the threaded bore 18 to tighten the channel nut 10 against the channel lips 81, 82 and to generate the final locking force. Figures 27 to 31 show this final, fully tightened and/or fully torqued, stage. In particular, the edges of the notches 19 in the flanges 11 and 12 might bite into the respective lips 81, 82 in this final state, in order to provide a form-locking connection.

## Claims

1. Connector unit for providing a connection to a strut channel (80) that has two opposing lips (81, 82), the connector unit comprising
• an elongate channel nut (10) for engaging behind the lips (81, 82) of the channel (80), wherein the channel nut (10) has a threaded bore (18) for threadedly receiving a threaded rod (50),
• a rotational driver (20) for rotationally coupling the threaded rod (50) to the channel nut (10), for rotating the channel nut (10) between a channel (80) insertion rotational position and a channel (80) engagement rotational position, and
• a lip insert (30) for engaging between the lips (81, 82) of the channel (80) so as to provide a rotational seat on the channel (80), wherein the rotational driver (20) is connected to the lip insert (30),
• wherein the lip insert (30) comprises at least one first resilient tongue (61', 61") for resiliently acting against a first lip (81) of the channel (80).

2. Connector unit according to claim 1,
**characterized in that**
the lip insert (30) comprises at least two first resilient tongues (61', 61") for resiliently acting against the first lip (81) of the channel (80).

3. Connector unit according to any of the preceding claims,
**characterized in that**
the lip insert (30) comprises at least two second resilient tongues (62', 62") for resiliently acting against the second lip (82) of the channel (80).

4. Connector unit according to claim 2 in combination with claim 3,
**characterized in that**
the two first resilient togues (61', 61"), the two second resilient tongues (62', 62") and the threaded bore (18) form a quincunx in viewing direction parallel to the axis of the threaded bore (18).

5. Connector unit according to any of the preceding claims,
**characterized in that**
the at least one first resilient tongue (61', 61") is integrally formed on the lip insert (30).

6. Connector unit according to any of the preceding claims,
**characterized in that**
the connector unit further comprises two spacers (71, 72) that project from the lip insert (30) on opposite sides of the lip insert (30), so as to define a pre-determined spacing to an adjacent connector unit.

7. Connector unit according to claim 6,
**characterized in that**
each of the two spacers (71, 72) is generally flat, wherein the two spacers (71, 72) extend in non-parallel relationship with one another.

8. Connector unit according to any of the preceding claims,
**characterized in that**
the rotational driver (20) comprises a first pin (51) and the lip insert (30) comprises a first pin receptacle (53) for receiving the first pin (51) when the channel nut (10) is in the channel (80) insertion rotational position.

9. Connector unit according to claim 8,
**characterized in that**
a first catch ridge (55) is arranged at the first pin receptacle (53) so as to provide a snap fit mechanism for the first pin (51).

10. Channel connector comprising
a connector unit according to any of the preceding claims,
a connector base (3) for abutting against the lips (81, 82) of the channel (80), wherein the lip insert (30) is arranged, at least partly, between the connector base (3) and the channel nut (10), and
a threaded rod (50) that passes, rotatably, through the connector base (3) and through the lip insert (30) to the rotational driver (20), wherein the rotational driver (20) couples the threaded rod (50) to the channel nut (10).

11. Connector arrangement comprising a channel (80) and a channel connector according to claim 10.
